# EUROPÄISCHE PATENTSCHRIFT

(11) **EP 1 735 550 B1**
(45) Veröffentlichungstag und Bekanntmachung des Hinweises auf die Patenterteilung: **02.06.2021**
(21) Anmeldenummer: 05735977.0
(22) Anmeldetag: 06.04.2005
(51) Int. Cl.: F16H 61/688, F16H 61/12

(54) **HYDRAULIKKREIS, VERFAHREN ZUM STEUERN DESSELBEN UND DOPPELKUPPLUNGSGETRIEBE**
HYDRAULIC CIRCUIT, METHOD FOR CONTROLLING SAID CIRCUIT AND DUAL CLUTCH GEARBOX
CIRCUIT HYDRAULIQUE, PROCEDE DE COMMANDE DE CE DERNIER ET BOITE À DOUBLE EMBRAYAGE

(30) Priorität: 14.04.2004 DE 102004018962
(43) Veröffentlichungstag der Anmeldung: 27.12.2006
(73) Patentinhaber: Bayerische Motoren Werke Aktiengesellschaft, 80788 München (DE)
(72) Erfinder: PETRZIK, Gunther, 78112 St. Georgen (DE); RUEHLE, Guenter, 74369 Loechgau (DE); NEUNER, Josef, 83064 Raubling (DE)
(74) Vertreter: Witte, Weller & Partner Patentanwälte mbB
(86) Internationale Anmeldenummer: PCT/EP2005/003585
(87) Internationale Veröffentlichungsnummer: WO 2005/103531

(56) Entgegenhaltungen:
- EP-A- 0 802 355
- WO-A-03/074909
- DE-A1- 10 148 087

## Beschreibung

Die vorliegende Erfindung betrifft ein Verfahren zum Steuern eines Hydraulikkreises für ein Doppelkupplungsgetriebe für Kraftfahrzeuge, wobei der Hydraulikkreis eine erste und eine zweite hydraulisch betätigbare Kupplung aufweist, deren Kupplungsdruck mittels jeweiliger Druckregelventile gesteuert wird, und wobei mittels einer Sicherheitsschaltung bei Auftreten eines Fehlers ein sicherer Zustand des Hydraulikkreises gewährleistet wird.

Ferner betrifft die vorliegende Erfindung ein Doppelkupplungsgetriebe für Kraftfahrzeuge, das eine erste und eine zweite hydraulische betätigbare Kupplung aufweist, wobei das Doppelkupplungsgetriebe einen Hydraulikkreis mit einem ersten und einem zweiten Kupplungskreis aufweist, wobei der erste Kupplungskreis ein erstes Druckregelventil zum Regeln eines ersten Kupplungsdruckes für die erste Kupplung aufweist, und wobei der zweite Kupplungskreis ein zweites Druckregelventil zum Regeln eines zweiten Kupplungsdruckes für die zweite Kupplung aufweist, sowie mit einer Sicherheitsschaltung, die im Falle eines Fehlers einen sicheren Zustand des Hydraulikkreises gewährleistet.

Ein solches Steuerverfahren und ein solches Doppelkupplungsgetriebe sind aus der EP 0 802 355 A bekannt.

Doppelkupplungsgetriebe für Kraftfahrzeuge haben in jüngster Zeit besonderes Interesse hervorgerufen. Sie basieren auf dem Grundkonzept herkömmlicher manueller Schaltgetriebe, weisen jedoch zwei Trennkupplungen auf. Die eine Trennkupplung verbindet eine Motorabtriebswelle mit einem ersten Getriebezweig, der bspw. die Gangstufen 1, 3, 5, ... beinhaltet. Die zweite Trennkupplung verbindet die Motorabtriebswelle mit einem zweiten, parallelen Getriebezweig, der bspw. die Getriebestufen 2, 4, 6, ... beinhaltet.

Die Abtriebe der zwei Getriebezweige sind mit einer gemeinsamen Ausgangswelle verbunden, die mit den Antriebsrädern des Kraftfahrzeuges verbunden ist.

Durch überschneidendes Betätigen der Trennkupplungen ist es möglich, Gangwechsel von benachbarten Gangstufen überschneidend ohne Zugkraftunterbrechung durchzuführen. Hierdurch sind Doppelkupplungsgetriebe sehr komfortabel. Da die Kraftübertragung reib- bzw. formschlüssig erfolgt, kann gleichzeitig ein vergleichsweise hoher Wirkungsgrad erzielt werden.

Doppelkupplungsgetriebe können in der Regel nur automatisiert betrieben werden. Dabei sind besondere Sicherheitsvorkehrungen zu treffen, um zu vermeiden, dass zwei Gangstufen gleichzeitig eingelegt und über die Trennkupplungen gleichzeitig belastet werden. Dies könnte zu einer Zerstörung der Radsätze und/oder der Trennkupplungen führen. Die Trennkupplungen sind dabei generell hydraulisch gesteuerte Kupplungen. Zwar können die Trennkupplungen als Trockenkupplungen ausgebildet sein. Es ist jedoch vorteilhaft, wenn die Trennkupplungen als Nasskupplungen, insbesondere als Nass-Lamellenkupplungen ausgebildet sind. Die Druckregelung der zwei Trennkupplungen muss schnell und trotzdem feinfühlig sein.

Aus der DE 101 34 115 A1 ist ein Hydraulikkreis zur hydraulischen Steuerung eines Doppelkupplungsgetriebes bekannt. Dabei weist der Hydraulikkreis einen ersten Teilkreis für die erste Trennkupplung und den ersten Getriebezweig sowie einen zweiten Teilkreis für die zweite Trennkupplung und den zweiten Getriebezweig auf.

Die Teilkreise sind eingangsseitig jeweils über Freigabeventile mit einer Hydraulikversorgung verbunden. Die Freigabeventile sind dabei als "fail-safe"-Ventile ausgebildet. Im Normalbetrieb werden die Freigabeventile elektrisch freigegeben. Bei Ausfall der elektrischen Steuerung werden die Freigabeventile durch Federn in eine Trennposition verfahren, in der die Teilkreise von der Hydraulikversorgung getrennt sind. Gleichzeitig werden die hydraulischen Teilkreise drucklos geschaltet, indem sie mit einem Tank verbunden werden. Hierdurch werden die zwei Trennkupplungen geöffnet. Das Fahrzeug rollt im Falle des Auftretens eines solchen Fehlers somit aus und bleibt dann stehen.

Aus der DE 101 38 395 A1 ist eine Notbetätigungsvorrichtung für eine automatisierte steuerbare Kupplung bekannt, die passiv schließbar ausgebildet ist. Dabei weist die Notbetätigungsvorrichtung einen Druckspeicher als Hilfsenergiespeicher zur Notbetätigung auf.

Aus der DE 101 20 882 A1 ist es bekannt, durch eine Anordnung aus zwei Rückschlagventilen und einem Druckbegrenzungsventil dafür zu sorgen, dass ein auf die Kupplungen wirkender Druck einen Maximalwert nicht übersteigt.

Aus der DE 102 38 104 A1 ist ferner ein Hydraulikkreis für ein Automatgetriebe bekannt. Das Automatgetriebe weist anstelle eines hydrodynamischen Wandlers eine Getriebekupplung bzw. eine Bremse als Anfahreinrichtung auf.

Um einen Notlauf auch bei Stillstand des Fahrzeugs zu ermöglichen, ist vorgesehen, dass das Automatgetriebe bei Auftreten eines Fehlers über ein von der Fahrzeuggeschwindigkeit und/oder der Motordrehzahl abhängiges Signal angesteuert wird. Hierdurch kann bewirkt werden, dass der Kraftschluss vom Antrieb zum Motor rechtzeitig unterbrochen wird, um den Motor im Notfallbetrieb nicht "abzuwürgen".

Das der Erfindung zugrundeliegende Problem besteht vor diesem Hintergrund darin, ein verbessertes Verfahren zum Ansteuern eines Hydraulikkreises für ein Doppelkupplungsgetriebe bzw. einen solchen Hydraulikkreis selbst anzugeben, wobei der Komfort und die Sicherheit bei Auftreten von Fehlern deutlich erhöht werden.

Diese Aufgabe wird durch ein Verfahren zum Steuern eines Hydraulikkreises für ein Doppelkupplungsgetriebe gemäß Anspruch 1 sowie durch ein Doppelkupplungsgetriebe gemäß Anspruch 8 gelöst, wobei die Sicherheitsschaltung so ausgelegt ist, dass bei Auftreten eines Teilfehlers, der nur einer der zwei Kupplungen zugeordnet ist, diese Kupplung geöffnet wird, und dass bei Auftreten eines Gesamtfehlers, der beiden Kupplungen zugeordnet ist, die Kupplung, deren Kupplungsdruck bei Auftreten des Gesamtfehlers kleiner ist, geöffnet wird und die andere Kupplung, deren Kupplungsdruck bei Auftreten des Gesamtfehlers größer ist, nicht geöffnet wird, um die Übertragung von Drehmoment über diese Kupplung aufrechtzuerhalten.

Durch diese Maßnahmen wird Folgendes erreicht.

Sofern ein Fehler auftritt, der nur eine Kupplung betrifft, wird diese Kupplung geöffnet und damit "abgeschaltet". Der Hydraulikkreis kann jedoch für die andere, nicht vom Fehler betroffene Kupplung weiterhin aktiv bleiben. Dabei kann das Fahrzeug bei Auftreten dieses Teilfehlers über die verbleibende Kupplung wie ein automatisiertes Schaltgetriebe betrieben werden, dem jeder zweite Gang fehlt. Falls die nicht betroffene Kupplung bspw. den Getriebezweig mit den Gängen 2, 4, 6, ... bedient, kann bspw. ein Anfahren im zweiten Gang erfolgen. Bei höheren Geschwindigkeiten kann vom zweiten in den vierten Gang geschaltet werden, ggf. auch in den sechsten Gang. Damit kann ein weitgehend normaler Fahrbetrieb einschließlich Stadtfahrbetrieb, Autobahn, etc. abgedeckt werden. Zwar versteht sich, dass Gangwechsel mit Zugkrafteinbruch erfolgen. Da die Funktionalität des Getriebes jedoch weit gehend erhalten bleibt, kann das Fahrzeug vom Fahrer noch einige Zeit bewegt werden, bevor eine Werkstatt angefahren wird. Das Holen eines Abschleppdienstes oder Ähnliches ist nicht erforderlich.

Bei Auftreten eines Gesamtfehlers, der beide Kupplungen betrifft, wird im Stand der Technik (z.B. eingangs erwähnte DE 101 34 115 A1) generell vorgeschlagen, beide Trennkupplungen zu öffnen. Hierdurch rollt das Fahrzeug aus.

Im vorliegenden Fall wird jedoch vorgeschlagen, die zum Zeitpunkt des Auftretens des Gesamtfehlers mit einem höheren Druck beaufschlagte Trennkupplung, d.h. die gerade aktive Kupplung, nicht zu öffnen, um den gerade vorherrschenden Fahrzustand aufrechtzuerhalten.

Hierdurch kann bspw. ein bereits eingeleitetes Überholmanöver, während dessen der Gesamtfehler auftritt, noch abgeschlossen werden, da die Übertragung von Drehmoment auf den Abrieb nicht zusammenbricht, sondern über die nicht geöffnete Kupplung aufrechterhalten wird.

Demzufolge kann die Fahrsicherheit insgesamt deutlich erhöht werden.

Das der Erfindung zu Grunde liegende Problem wird auf diese Weise vollkommen gelöst.

Von besonderem Vorzug ist es bei den erfindungsgemäßen Verfahren, wenn eine Kupplung geöffnet wird, indem die Verbindung zwischen der Kupplung und dem zugeordneten Druckregelventil getrennt wird und der Kupplungsdruck verringert wird.

Bei dieser Ausführungsform erfolgt die Beeinflussung der Kupplung unmittelbar im Bereich des Kupplungsdruckes. Da das Druckregelventil hiervon unbeeinflusst bleibt, kann das Druckregelventil auf seine eigentlichen Aufgaben optimiert werden, nämlich das Regeln des Kupplungsdruckes im Normalzustand. Auch kann das Öffnen einer Kupplung schneller erfolgen als in Fällen, bei denen die Trennung zwischen Druckregelventil und Hydraulikversorgung erfolgt.

Ferner ist es bei dieser Ausführungsform vorteilhaft, wenn der Kupplungsdruck bei Öffnen der Kupplung verringert wird, indem die Kupplung drucklos geschaltet wird.

Dies kann auf einfache Weise bspw. mittels eines Wegeventils erfolgen, das die Kupplung bspw. mit dem Tank verbindet.

Dabei kann vorgesehen werden, dass der Kupplungsdruck unmittelbar abfällt.

Besonders bevorzugt ist es jedoch, wenn der Kupplungsdruck bei Öffnen der Kupplung allmählich verringert wird.

Hierdurch werden Drehmomentstöße verringert. Dies kann bspw. erreicht werden, indem in die geschaltete Leitung von der Kupplung zu dem Tank eine Blende oder Ähnliches integriert wird.

Von besonderem Vorteil ist es ferner, wenn die Sicherheitsschaltung eine Kupplung mittels eines mechanischen oder hydraulischen Energiespeichers öffnet.

Hierdurch kann erreicht werden, dass die Sicherheitsschaltung die geforderte Funktionalität auch dann erfüllt, wenn die elektrische Leistungsversorgung, einschließlich der Versorgung einer elektrischen Steuereinrichtung, ausgefallen ist.

Dabei ist es von besonderem Vorteil, wenn die Sicherheitsschaltung eine Kupplung öffnet, indem der Energiespeicher ein Ventil betätigt.

Hierbei kann das Ventil bspw. ein Wegeventil sein, das im Normalfall gegen den Energiespeicher aktiv in eine Freigabeposition versetzt wird, bspw. durch elektrische (elektromagnetische) Ansteuerung.

Bei dem erfindungsgemäßen Verfahren ist es insgesamt ferner vorteilhaft, wenn die Sicherheitsschaltung bei Auftreten eines Gesamtfehlers die Kupplungsdrücke vergleicht, indem die Kupplungsdrücke an entgegengesetzt wirkende Steuerflächen eines Logikventils angelegt werden.

Von besonderem Vorzug ist es dabei, wenn das Logikventil nur eine oder noch besser gar keine Feder aufweist.

Bei dem erfindungsgemäßen Hydraulikkreis ist es vorgesehen, dass die Kupplungskreise jeweils ein Freigabeventil aufweisen, das zwischen dem Druckregelventil und der Kupplung angeordnet und dazu ausgelegt ist, die Verbindung zwischen der Kupplung und dem zugeordneten Druckregelventil zu schließen oder zu trennen.

Hierdurch kann das Öffnen einer Kupplung im Fehlerfall erfolgen, ohne dass das Druckregelventil hierauf abgestimmt sein muss.

Von besonderem Vorteil ist es dabei, wenn die Freigabeventile jeweils mittels eines Energiespeichers in eine Trennposition vorgespannt sind, in der sie die Verbindung zwischen der Kupplung und dem Druckregelventil trennen.

Hierdurch kann ein "fail-safe"-Betrieb eingerichtet werden, da die Kupplung auch dann geöffnet werden kann, wenn die elektrische Energieversorgung ausfällt.

Auch ist es erfindungsgemäß vorgesehen, dass die Freigabeventile in der Trennposition die Kupplung mit einer weiteren Ventilanordnung verbinden, die dazu ausgelegt ist, die Kupplung mit einem Tank oder mit einer Druckhalteeinrichtung zu verbinden, je nach dem, ob ein Teil- oder ein Gesamtfehler aufgetreten ist.

Durch diese Maßnahme wird erreicht, dass die erfindungsgemäße funktionale Unterscheidung zwischen Teilfehler und Gesamtfehler auf einfache Weise mittels einer weiteren Ventilanordnung erzielbar ist.

Dabei ist es von besonderem Vorteil, wenn die weiteren Ventilanordnungen jeweils durch ein Steuerventil gebildet sind, das getrennt von dem zugeordneten Freigabeventil ausgebildet ist.

Alternativ hierzu können die weiteren Ventilanordnungen jeweils in das andere Freigabeventil integriert sein.

Dies führt zu einer kompakten Ausführung, mit einer geringen Anzahl von Einzelventilen.

Insgesamt ist es vorteilhaft, wenn die Sicherheitsschaltung eine Druckhalteeinrichtung aufweist, die aus dem Versorgungsdruck einen Haltedruck für jene Kupplung erzeugt, deren Kupplungsdruck bei Auftreten des Gesamtfehlers größer ist, um die Übertragung von Drehmoment über diese Kupplung aufrechtzuerhalten.

Die Druckhalteeinrichtung erzeugt den Haltedruck in der Regel aus dem Leitungsdruck, und zwar vorzugsweise so, dass der Haltedruck auch unabhängig von elektrisch angesteuerten Ventilanordnungen aus dem Leitungsdruck erzeugt werden kann. Dies erfolgt bspw., indem die Druckhalteeinrichtung unmittelbar an den Ausgang einer Pumpe des Hydrauliksystems angeschlossen wird, die in Abhängigkeit von der Drehzahl eines Motors bzw. der Fahrzeuggeschwindigkeit angetrieben wird. Demzufolge kann der Haltedruck auch dann erzeugt werden, wenn die elektrische Stromversorgung zusammengebrochen ist.

Ferner ist es erfindungsgemäß vorgesehen, dass die Druckhalteeinrichtung eine Druckvergleichseinrichtung aufweist, die den ersten und den zweiten Kupplungsdruck miteinander vergleicht, und bei Auftreten eines Gesamtfehlers die Kupplung mit dem höheren Kupplungsdruck mit dem Haltedruck versorgt.

Hierbei ist es von besonderem Vorteil, wenn die Druckvergleichseinrichtung ein Wegeventil aufweist, das durch einander gegenüberliegende Steuerflächen betätigbar ist, die mit dem ersten bzw. dem zweiten Kupplungsdruck verbunden sind.

Hierbei ist es von besonderem Vorteil, dass die Druckvergleichseinrichtung durch ein einfaches Logik-Wegeventil aufgebaut sein kann, das insbesondere keine Federn oder Ähnliches benötigt. Das Wegeventil wird nach der Art einer "Druckwaage" angesteuert.

Ferner ist es hierbei vorteilhaft, wenn die Steuerflächen an das Übertragungsverhalten der zugeordneten Kupplung angepasst sind.
- Fig. 2: den Hydraulikkreis der Fig. 1 bei Auftreten eines Teilfehlers betreffend eine Kupplung;
- Fig. 3: den Hydraulikkreis der Fig. 1 bei Auftreten eines Teilfehlers betreffend die andere Kupplung;
- Fig. 4: den Hydraulikkreis der Fig. 1 bei Auftreten eines Gesamtfehlers;
- Fig. 5: eine schematische Darstellung einer alternativen Ausführungsform eines erfindungsgemäßen Hydraulickreises;
- Fig. 6: den Hydraulikkreis der Fig. 5 bei Auftreten eines Teilfehlers betreffend eine Kupplung;
- Fig. 7: den Hydraulikkreis der Fig. 5 bei Auftreten eines Teilfehlers betreffend die andere Kupplung;
- Fig. 8: den Hydraulikkreis der Fig. 5 bei Auftreten eines Gesamtfehlers; und
- Fig. 9: eine alternative Ausführungsform eines Hydraulikkreises.

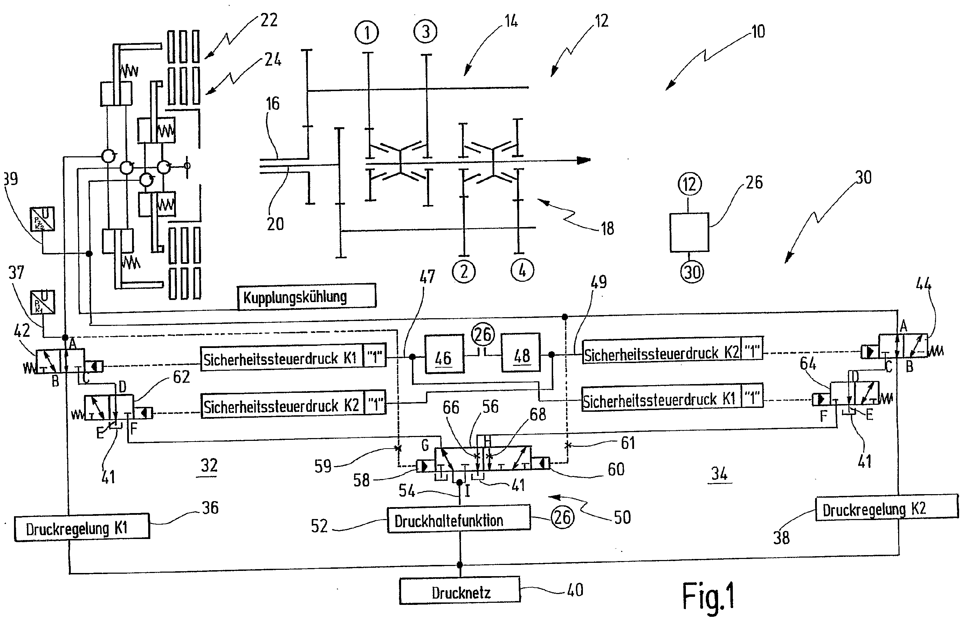

In Fig. 1 ist eine erste Ausführungsform eines erfindungsgemäßen Doppelkupplungsgetriebes generell mit 10 bezeichnet.

Das Doppelkupplungsgetriebe 10 weist in an sich herkömmlicher Weise ein Stirnradgetriebe 12 mit einer Mehrzahl von Radsätzen (im dargestellten Fall beispielhaft für Gangstufen 1 bis 4) auf. Dabei weist das Stirnradgetriebe 12 ein erstes Teilgetriebe 14 für die Gangstufen 1 und 3 auf, das eine hohle Eingangswelle 16 besitzt. Das Stirnradgetriebe 12 weist ferner ein zweites Teilgetriebe 18 für die Gangstufen 2 und 4 auf, das eine Eingangswelle 20 besitzt. Die Eingangswelle 20 und die hohle Eingangswelle 16 liegen konzentrisch zueinander.

Ferner weist das Doppelkupplungsgetriebe 10 eine erste Trennkupplung bzw. Kupplung 22 und eine zweite Trennkupplung bzw. Kupplung 24 auf. Die zweite Kupplung 24 ist konzentrisch zu der ersten Kupplung 22, radial innerhalb der ersten Kupplung 22 vorgesehen.

Ein Ausgangsglied der ersten Kupplung 22 ist mit der hohlen Eingangswelle 16 verbunden. Ein Ausgangsglied der zweiten Kupplung 24 ist mit der Eingangswelle 20 verbunden. Die Eingangsglieder beider Kupplungen 22, 24 sind mit einer Abtriebswelle eines Motors (insbesondere Verbrennungsmotors) eines Kraftfahrzeuges verbunden.

Ein derartiger Aufbau und die Funktionsweise eines solchen Doppelkupplungsgetriebes 10 sind allgemein bekannt. Kurz gesagt können Gangwechsel realisiert werden, indem die zwei Kupplungen 22, 24 überschneidend betätigt werden. Dabei kann die Gangstufe des Zielganges bereits vor Einleiten des Gangwechsels eingelegt sein (durch Betätigen der zugeordneten Schaltkupplung). Das getriebeeingangsseitig anstehende Moment kann dann durch Betätigen der Trennkupplung des Zielganges übernommen werden. Hierbei wird die Trennkupplung des Quellganges erst dann geöffnet, wenn das getriebeeingangsseitige Moment vollständig oder nahezu vollständig übernommen worden ist. Hierdurch kann ein Gangwechsel ohne jeden Zugkrafteinbruch erfolgen.

Die Darstellung mit vier Gangstufen ist lediglich als Beispiel zu verstehen. Das Stirnradgetriebe 12 kann auch mehr Gangstufen aufweisen.

Zur Steuerung des Doppelkupplungsgetriebes 10 ist eine schematisch gezeigte Steuereinrichtung 26 vorgesehen. Die Steuereinrichtung 26 steuert zum einen das Stirnradgetriebe 12 (genauer gesagt dessen Schaltkupplungen) und zum anderen einen Hydraulikkreis 30 zum Betätigen der zwei Kupplungen 22, 24.

Der Hydraulikkreis 30 weist einen ersten Kupplungskreis 32 für die erste Kupplung 22 und einen zweiten Kupplungskreis 34 für die zweite Kupplung 24 auf.

Der erste Kupplungskreis 32 weist eine Druckregeleinrichtung 36 zur Regelung des Kupplungsdruckes 37 der ersten Kupplung 22 auf. Der zweite Kupplungskreis 34 weist eine zweite Druckregeleinrichtung 38 zur Regelung des Kupplungsdruckes 39 der zweiten Kupplung 24 auf.

Die Druckregeleinrichtungen 36, 38 sind an ein Drucknetz 40 angeschlossen, das einen - in der Regel konstanten - Leitungsdruck zur Verfügung stellt.

Der Hydraulikkreis 30 weist ferner einen drucklosen Tank 41 auf.

Ferner ist vorgesehen, dass überschüssiges Steueröl aus den zwei Kupplungen 22, 24 einer Kupplungskühlung zugeführt wird.

Die erste Druckregeleinrichtung 36 ist mit der ersten Kupplung 22 über ein erstes Freigabeventil 42 verbunden. In entsprechender Weise ist die zweite Druckregeleinrichtung 38 mit der zweiten Kupplung 24 über ein zweites Freigabeventil 44 verbunden.

Die Freigabeventile 42, 44 sind jeweils als Wegeventile ausgebildet, im vorliegenden Fall als 3/2-Wegeventile. Die Freigabeventile 42, 44 weisen jeweils einen ersten Anschluss A, einen zweiten Anschluss B und einen dritten Anschluss C auf. Die Freigabeventile 42, 44 werden im Normalfall aktiv so angesteuert, dass die Anschlüsse A und B verbunden sind, womit die jeweiligen Druckregeleinrichtungen 36, 38 mit den zugeordneten Kupplungen 22, 24 verbunden sind, wie es in Fig. 1 dargestellt ist.

Die aktive Ansteuerung erfolgt durch einen jeweiligen Sicherheitssteuerdruck K1 bzw. K2, der die Freigabeventile 42, 44 in die in Fig. 1 gezeigte Normalposition gegen die Kraft einer jeweiligen Feder betätigt.

Der Sicherheitssteuerdruck K1 wird von einer Freigabesteuereinrichtung 46 erzeugt, die mit der Steuereinrichtung 26 verbunden ist. In entsprechender Weise wird der Sicherheitssteuerdruck K2 für das zweite Freigabeventil 44 von einer zweiten Freigabesteuereinrichtung 48 erzeugt, die ebenfalls mit der Steuereinrichtung 26 verbunden ist.

Die Freigabesteuereinrichtungen 46, 48 erzeugen, angesteuert von der Steuereinrichtung 26, im Normalfall die jeweiligen Sicherheitssteuerdrücke K1 bzw. K2, die größer sind als Null (Logikwert "1"). Sofern der ersten Kupplung 22, dem ersten Kupplungskreis 32 und/oder dem ersten Teilgetriebe 14 ein Fehler zugeordnet wird, wird der Sicherheitssteuerdruck K1 verringert, auf einen Logikwert "0", wie es nachstehend noch erläutert werden wird. Entsprechenderweise wird der Sicherheitssteuerdruck K2 von der Freigabesteuereinrichtung 48 auf einen Logikwert "0" gesetzt, wenn der zweiten Kupplung 24, dem zweiten Kupplungskreis 34 und/oder dem zweiten Teilgetriebe 18 ein Fehler zugeordnet wird.

Der Hydraulikkreis 30 weist ferner eine Druckhalteeinrichtung 50 auf.

Die Druckhalteeinrichtung 50 weist eine Haltedruckversorgung 52 auf, die mit dem Drucknetz 40 verbunden ist und einen Haltedruck 54 erzeugt.

Die Haltedruckversorgung 52 ist ebenfalls mit der Steuereinrichtung 26 verbunden. Sofern der Haltedruckversorgung 52 ein Signal zugeführt wird, dass das Doppelkupplungsgetriebe 10 ordnungsgemäß funktioniert, wird kein oder ein sehr geringer Haltedruck 54 erzeugt.

Sofern dieses Signal an die Haltedruckversorgung 52 abfällt, erzeugt die Haltedruckversorgung 52 den Haltedruck 54 aus dem Drucknetz 40, indem der von dem Drucknetz 40 bereitgestellte Leitungsdruck als Haltedruck 54 verwendet wird.

Dabei ist darauf Wert zu legen, obgleich dies nicht dargestellt ist, dass der Haltedruck 54 rein hydraulisch gesteuert zur Verfügung gestellt wird, also auch dann, wenn die gesamte Stromversorgung des Kraftfahrzeugs zusammengebrochen ist. Sofern der Verbrennungsmotor noch läuft, kann die Pumpe zur Bereitstellung des Leitungsdruckes angetrieben werden und erzeugt über das Drucknetz 40 den Leitungsdruck, der gleichzeitig als Haltedruck 54 verwendbar ist.

Die Druckhalteeinrichtung 50 weist ferner ein Logikventil 56 auf. Das Logikventil 56 ist als 6/2-Wegeventil mit zwei entgegengesetzten hydraulischen Steuerflächen 58, 60 ausgebildet.

An die Steuerfläche 58 wird über eine Blende 59 der Kupplungsdruck 37 angelegt. An die Steuerfläche 60 wird über eine Blende 61 der Kupplungsdruck 39 der zweiten Kupplung 24 angelegt.

Sofern der erste Kupplungsdruck 37 größer ist als der zweite Kupplungsdruck 39, befindet sich das Logikventil 56 in der dargestellten Schaltstellung. Sofern der zweite Kupplungsdruck 39 größer ist als der erste Kupplungsdruck 37 schaltet das Logikventil 56 in die zweite Stellung um.

Das Logikventil 56 weist einen ersten Eingangsanschluss I (gebildet durch zwei Anschlüsse) und zwei Ausgangsanschlüsse G und H auf.

Die Druckhalteeinrichtung 50 weist ferner ein erstes Steuerventil 62 und ein zweites Steuerventil 64 auf.

Die Steuerventile 62, 64 sind wie die Freigabeventile 42, 44 als 3/2-Wegeventile ausgebildet. Die Steuerventile 62, 64 sind in einem Normalbetrieb ebenfalls aktiv durch einen jeweiligen Sicherheitssteuerdruck K2 bzw. K1 in eine Normalstellung betätigt, die in Fig. 1 dargestellt ist.

Ein Anschluss D des ersten Steuerventils 62 ist mit einem Anschluss C des ersten Freigabeventils 42 verbunden. In entsprechender Weise ist ein erster Anschluss D des zweiten Steuerventils 64 mit einem Anschluss C des zweiten Freigabeventils 44 verbunden.

Das dem ersten Freigabeventil 42 zugeordnete erste Steuerventil 62 wird nicht mit dem Sicherheitssteuerdruck K1, sondern mit dem Sicherheitssteuerdruck K2 angesteuert, der von der zweiten Freigabesteuereinrichtung 48 erzeugt wird. In entsprechender Weise wird das zweite Steuerventil 64, das dem zweiten Freigabeventil 44 zugeordnet ist, mit dem Sicherheitssteuerdruck K1 angesteuert, der von der ersten Freigabesteuereinrichtung 46 erzeugt wird.

Die Steuerventile 62, 64 weisen jeweils einen weiteren Anschluss E auf, der mit dem Tank 41 verbunden ist. Ferner weist das erste Steuerventil 62 einen Anschluss F auf, der mit einem Anschluss G des Logikventils 56 verbunden ist. Ein entsprechender Anschluss F des zweiten Steuerventils 64 ist mit einem Anschluss H des Logikventils 56 verbunden.

In der Darstellung der Fig. 1 sind zwei Leitungsverbindungen des Logikventils 56 mit Blenden 66 bzw. 68 versehen. Diese sind jedoch bei der Ausführungsform der Fig. 1 ohne Funktion. Ferner ist anzumerken, dass die Steuerflächen 58, 60 zwar identisch sein können, jedoch auch unterschiedlich sein können. In jedem Fall sind sie an das Übertragungsverhalten der zugeordneten Kupplung 22 bzw. 24 angepasst. Da die Kupplung 24 konzentrisch im Inneren der ersten Kupplung 22 angeordnet ist, ist das Druckniveau zu der Betätigung der zweiten Kupplung 24 ggf. ein anderes als das Druckniveau zur Betätigung der ersten Kupplung 22. Dieses unterschiedliche Übertragungsverhalten kann sich in den Steuerflächen 58, 60 niederschlagen. Entscheidend ist, dass das Logikventil 56 jeweils in die Stellung geschaltet wird, die der jeweils "aktiveren" Kupplung der Kupplungen 22, 24 zugeordnet ist, also jener Kupplung, die den Zustand des Doppelkupplungsgetriebes 10 momentan prägt.

Die von den Freigabesteuereinrichtungen 46, 48 erzeugten Sicherheitssteuerdrücke K1, K2 nehmen in der Regel einen von zwei logischen Zuständen ein. Der logische Zustand "1" entspricht einem Druck, der einer Kraft entspricht, die größer ist als die Gegenkraft der in den Freigabeventilen 42, 44 bzw. den Steuerventilen 62, 64 jeweils enthaltenen Gegendruckfeder.

Der zweite Druck, der von den Freigabesteuereinrichtungen 46, 48 erzeugt wird, ist ein Druck von logisch "0". Dies kann ein sehr geringer Druck sein, der in jedem Fall eine Kraft erzeugt, die kleiner ist als die von den jeweiligen Gegendruckfedern erzeugte Kraft. Der Druck mit dem logischen Zustand "0" kann jedoch auch ein Druck von Null sein.

Mit dem Hydraulikkreis 30 lässt sich das Doppelkupplungsgetriebe 10 besonders sicher und gleichzeitig komfortabel betreiben, wie es nachstehend anhand der Figuren 1 bis 4 erläutert wird. In Fig. 1 ist der "Normalzustand" gezeigt, bei dem beide Sicherheitssteuerdrücke K1, K2 logisch "1" sind. Dies führt dazu, dass die Freigabeventile 42, 44 in einer Schaltstellung sind, in der sie die Druckregeleinrichtungen 36, 38 mit den jeweils zugeordneten Kupplungen 22, 24 unmittelbar verbinden.

Die Steuerventile 62, 64 sind ebenfalls aktiv angesteuert. Die Schaltstellung der zwei Steuerventile 62, 64 ist in dem gezeigten Normalzustand jedoch nicht relevant. Dies gilt um so mehr dann, wenn wie bei der vorliegenden Ausführungsform der Haltedruck 54 in dem gezeigten Normalzustand ebenfalls Null bzw. logisch "0" ist. Denn im Normalzustand steuert die Steuereinrichtung 26 die Haltedruckversorgung 52 so an, dass kein Haltedruck 54 erzeugt wird.

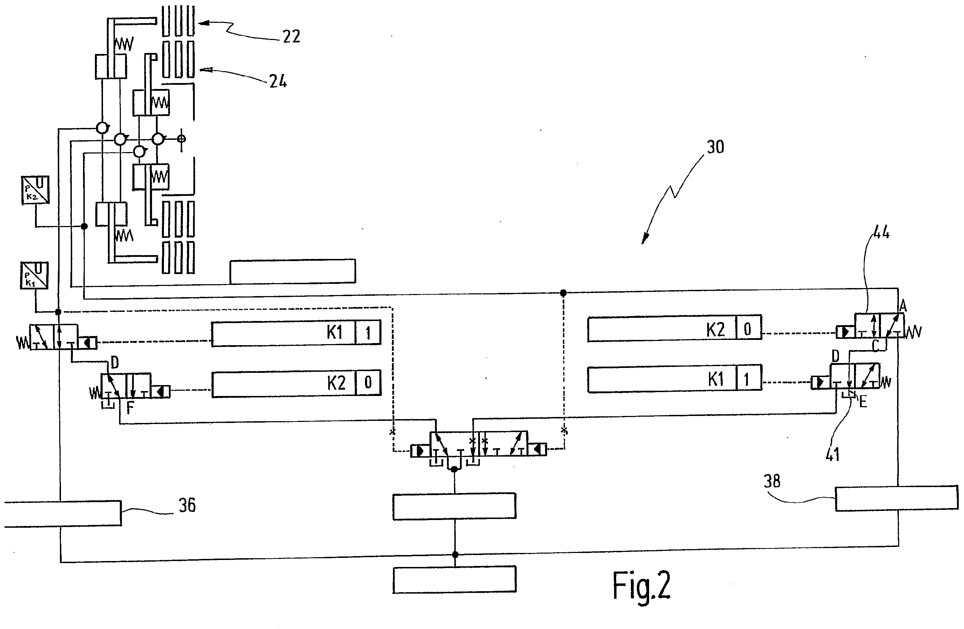

In Fig. 2 ist ein Zustand dargestellt, bei dem ein Teilfehler aufgetreten ist, der der zweiten Kupplung 24, dem zweiten Kupplungskreis 34 und/oder dem zweiten Teilgetriebe 18 zugeordnet wird. In diesem Fall erzeugt die zweite Freigabesteuereinrichtung 48 einen Sicherheitssteuerdruck K2 von logisch "0". Dies führt dazu, dass das zweite Freigabeventil 44 von der Gegendruckfeder in die zweite Schaltstellung gezwungen wird, in der die Kupplung 24 von der zugeordneten Druckregeleinrichtung 38 getrennt ist. Statt dessen ist der Anschluss A des zweiten Freigabeventils 44 mit dessen Anschluss C und damit mit dem Anschluss D des zweiten Steuerventils 64 verbunden. Das zweite Steuerventil 64 wird von dem Sicherheitssteuerdruck K1 angesteuert und ist weiterhin gegen die Kraft der Gegendruckfeder aktiv. Dabei ist der Anschluss D über eine Leitung mit dem Anschluss E und damit mit dem Tank 41 verbunden. Demzufolge ist die zweite Kupplung 24 drucklos geschaltet. Die zweite Kupplung 24 ist geöffnet.

Die Funktionsweise der ersten Kupplung 22, des ersten Kupplungskreises 32 und des ersten Teilgetriebes 14 ist jedoch fehlerfrei. Daher erzeugt die erste Freigabesteuereinrichtung 46 weiterhin einen Sicherheitssteuerdruck K1 von logisch "1".

Demzufolge ist die erste Druckregeleinrichtung 36 nach wie vor mit der ersten Kupplung 22 verbunden.

Die erste Kupplung 22 ist dem ersten Teilgetriebe 14 mit den Gangstufen eins und drei zugeordnet. Demzufolge lässt sich durch eine geeignete Schaltstrategie allein mit der ersten Kupplung 22 und dem ersten Teilgetriebe 14 im ersten Gang anfahren. Anschließend kann bspw. vom ersten unmittelbar in den dritten Gang geschaltet werden. Dabei findet naturgemäß eine Zugkraftunterbrechung statt. Da es sich jedoch um einen Notbetrieb handelt, kann dies in Kauf genommen werden. Entscheidend ist, dass der Fahrer in diesem Fall trotz des Ausfalls eines wesentlichen Elementes in der zweiten Kupplung 24, dem zweiten Kupplungskreis 34 und/oder dem zweiten Teilgetriebe 18 die Fahrt fortsetzen kann, und zwar in den Gangstufen eins und drei. Hierdurch ist nicht nur ein Kriechbetrieb möglich, es kann vielmehr auch in höheren Geschwindigkeitsregionen gefahren werden.

Bei heutzutage üblichen Schaltgetrieben mit sechs oder mehr Gangstufen ist folglich ein Betrieb in den Gangstufen eins, drei und fünf möglich.

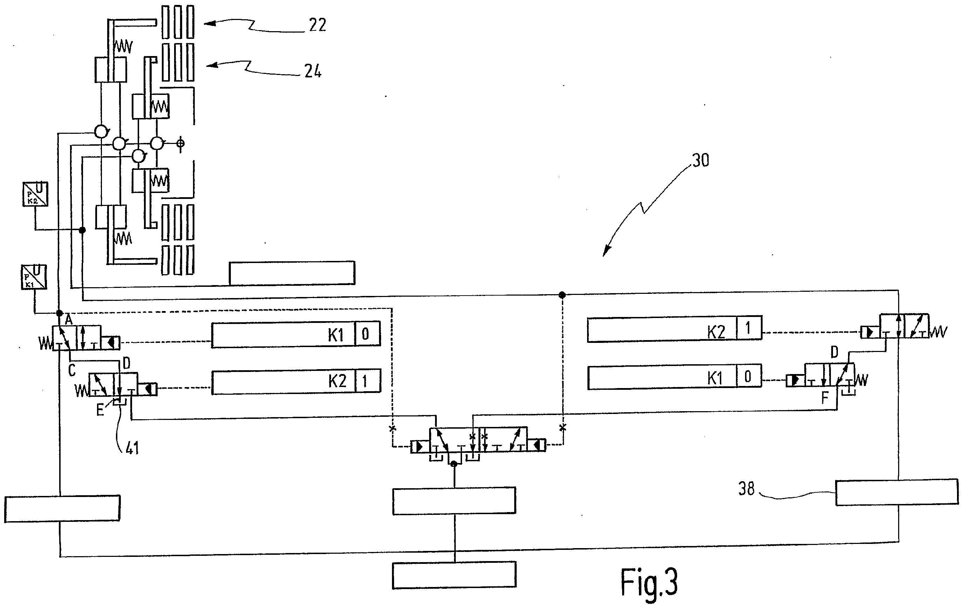

Fig. 3 zeigt in entsprechender Weise einen Zustand, bei dem ein Fehler in der ersten Kupplung 22, dem ersten Kupplungskreis 32 und/oder dem ersten Teilgetriebe 14 aufgetreten ist. Hierdurch ist der Sicherheitssteuerdruck K1 logisch "0". Die erste Kupplung 22 ist von der ersten Druckregeleinrichtung 36 getrennt und ist über das erste Freigabeventil 42 und das erste Steuerventil 62 mit dem Tank 41 verbunden.

Die Funktion der zweiten Kupplung 24 bleibt aufrechterhalten. In der dargestellten Ausführungsform bedient die zweite Kupplung 24 das zweite Teilgetriebe 18 mit den Gangstufen zwei und vier (bei einem Sechsganggetriebe auch Gangstufe sechs). Demzufolge kann der Fahrer mit den Gangstufen zwei, vier und sechs im Notbetrieb fahren, bspw. eine Werkstatt ansteuern oder Ähnliches.

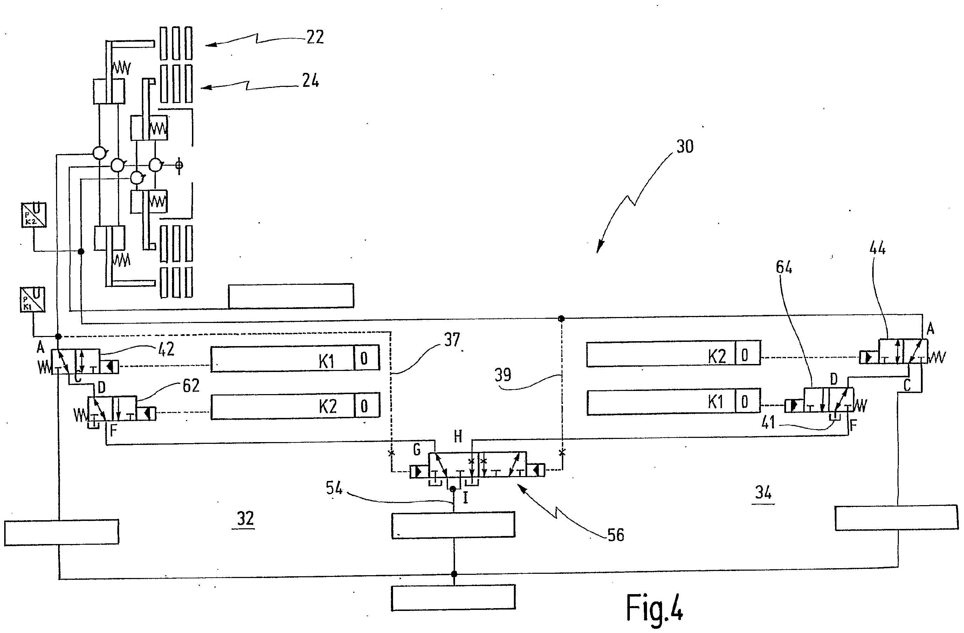

Fig. 4 zeigt den Zustand beim Auftreten eines Gesamtfehlers. Unter einem Gesamtfehler wird vorliegend verstanden, dass ein Fehler aufgetreten ist, der beide Kupplungen 22, 24, beide Kupplungskreise 32, 34 und/oder beide Teilgetriebe 14, 18 betrifft. In diesem Fall ist ein Weiterfahren nicht möglich. Es wird jedoch aus Sicherheitsgründen gewährleistet, dass die zum Zeitpunkt des Auftretens des Gesamtfehlers aktivere Kupplung geschlossen bleibt, wohingegen die andere Kupplung zwangsweise geöffnet wird.

Dies wird wie folgt realisiert.

Beim Auftreten des Gesamtfehlers sind beide Sicherheitssteuerdrücke K1, K2 logisch "0".

Demzufolge sind die Kupplungen 22, 24 von ihren jeweiligen Druckregeleinrichtungen 36, 38 getrennt.

Die Freigabeventile 42, 44 und die Steuerventile 62, 64 sind durch die Gegendruckfeder in eine solche Schaltstellung betätigt, dass die jeweiligen Kupplungen 22, 24 über die Anschlüsse A, C, D und F mit dem Anschluss G bzw. dem Anschluss H des Logikventils 56 verbunden sind.

Das Logikventil 56 befindet sich zum Zeitpunkt des Auftretens des Gesamtfehlers in einer seiner zwei Schaltstellungen, in Abhängigkeit davon, welcher Kupplungsdruck 37, 39 größer ist. Im Falle der Darstellung der Fig. 4 ist der Kupplungsdruck 37 der ersten Kupplung 22 größer als der Kupplungsdruck 39 der zweiten Kupplung 24.

Demzufolge wird in der Darstellung der Fig. 4 die erste Kupplung 22 über die Anschlüsse I und G des Logikventils 56 sowie die Anschlüsse F, D, C und A des ersten Steuerventils 62 bzw. des ersten Freigabeventils 42 mit dem Haltedruck 54 versorgt.

Da der Haltedruck 54 unmittelbar aus dem Leitungsdruck abgeleitet ist, wird die erste Kupplung 22 hierdurch geschlossen. Es versteht sich, dass die Haltedruckversorgung 52 eine Druckbegrenzung beinhalten kann, um zu vermeiden, dass eine der Kupplungen 22, 24 durch den Haltedruck 54 überlastet wird. Der Haltedruck 54 ist somit auf den maximal zulässigen Druck der Kupplungen 22, 24 begrenzt.

Die zweite Kupplung 24 wird auf Grund der Schaltstellung des zweiten Freigabeventils 44 und des zweiten Steuerventils 64 über deren Anschlüsse A, C, D und E mit dem Tank 41 verbunden.

Demzufolge wird die zweite Kupplung 24 bei Auftreten des Gesamtfehlers drucklos geschaltet. Hierdurch wird ein Konflikt zwischen den zwei Kupplungen 22, 24 vermieden.

Der Gesamtfehler kann sich bspw. darin äußern, dass die elektrische Versorgung für den Hydraulikkreis 30 zusammenbricht. In diesem Fall wird ohne weitere Zufuhr von elektrischer Energie der in Fig. 4 dargestellte Zustand eingerichtet. Da die erste Kupplung 22 bei Auftreten des Gesamtfehlers die aktive Kupplung war, wird die erste Kupplung 22 geschlossen. Demzufolge kann über die erste Kupplung 22 weiterhin Drehmoment übertragen werden.

Sollte sich das Fahrzeug des Doppelkupplungsgetriebes 10 im Falle des Auftretens des Gesamtfehlers bspw. in einem Überholvorgang befunden haben, so kann auch nach Auftreten des Gesamtfehlers weiterhin Moment über die erste Kupplung 22 (und über den in dem ersten Teilgetriebe 14 geschalteten Gang) auf die Antriebsräder des Kraftfahrzeugs übertragen werden. Demzufolge kann ein sicherer Fahrbetrieb auch bei Auftreten eines Gesamtfehlers aufrechterhalten werden.

Der Fahrer kann das Fahrzeug dann in dem bei Auftreten des Gesamtfehlers eingerichteten Zustand weiterfahren, um einen sicheren Ort zum Anhalten zu erreichen. Theoretisch ist es zwar denkbar, dass der Fahrer in diesem Zustand (bei geschlossener Kupplung 22 und eingelegter Gangstufe des ersten Teilgetriebes 14) weiterfährt. Es wird jedoch davon ausgegangen, dass in diesem Fall dem Fahrer ein Alarmsignal vermittelt wird, das ihn zum Anhalten auffordert. Im Falle eines Auftretens eines Gesamtfehlers wird davon ausgegangen, dass das Fahrzeug aus Sicherheitsgründen nicht weiterbetrieben, sondern so schnell wie möglich gesichert abgestellt werden sollte.

Insgesamt wird mit dem Hydraulikkreis 30 der Figuren 1 bis 4 ein hoher Komfort erzielt. Denn bei Auftreten eines Teilfehlers kann das Fahrzeug mit dem jeweils anderen Leistungsübertragungsstrang weitergefahren werden, um bspw. eine Werkstatt zu erreichen.

Im Falle des Auftretens eines Gesamtfehlers bleibt die aktivere Kupplung der zwei Kupplungen 22, 24 geschlossen. Es kann also trotz Auftreten des Gesamtfehlers weiterhin Drehmoment auf die Antriebsräder des Kraftfahrzeugs übertragen werden.

Im Stand der Technik wird der gesamte Hydraulikkreis bei Auftreten eines Gesamtfehlers in der Regel drucklos geschaltet, so dass beide Kupplungen geöffnet werden. Dies kann zu der Situation führen, dass bei Auftreten eines Gesamtfehlers während eines Überholvorganges plötzlich keine Leistung mehr auf die Antriebsräder übertragen wird.

Eine derartige Situation kann mit dem Hydraulikkreis der Figuren 1 bis 4 sicher vermieden werden.

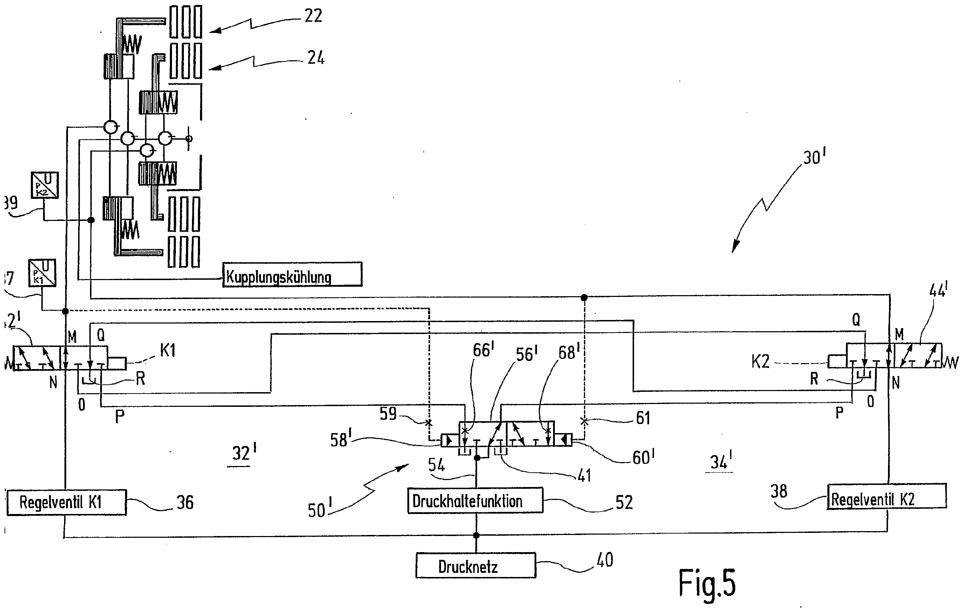

Die Figuren 5 bis 8 zeigen eine zweite Ausführungsform des erfindungsgemäßen Hydraulikkreises, der in diesen Figuren generell mit 30' bezeichnet ist.

Der Hydraulikkreis 30' der Figuren 5 bis 6 ist vom Aufbau und von der Funktion her identisch zu dem Hydraulikkreis 30 der Figuren 1 bis 4, mit Ausnahme der nachfolgend beschriebenen Merkmale. Im Übrigen wird vollumfänglich Bezug genommen auf die obige Beschreibung der Figuren 1 bis 4.

Während bei dem Hydraulikkreis 30 der Figuren 1 bis 4 jeder Kupplung ein Freigabeventil 42 und ein Steuerventil 62 zugeordnet sind, ist bei dem Hydraulikkreis 30' statt dessen jeweils nur ein einzelnes Freigabeventil 42' bzw. 44' vorgesehen.

Dabei beinhaltet das Freigabeventil 42' die Funktionalität des ersten Freigabeventils 42 sowie des zweiten Steuerventils 64 des Hydraulikkreises 30'. Das zweite Freigabeventil 44' beinhaltet die Funktionalität des zweiten Freigabeventils 44 sowie des ersten Steuerventils 62 des Hydraulikkreises 30.

Demzufolge wird an das erste Freigabeventil 42' lediglich der Sicherheitssteuerdruck K1 angelegt. Entsprechend wird an das zweite Freigabeventil 44' nur der zweite Sicherheitssteuerdruck K2 angelegt.

Die Freigabeventile 42', 44' sind jeweils als 6/2-Wegeventile ausgebildet und erfüllen die gleiche Funktionalität wie oben in Bezug auf die Freigabeventile 42, 44 und die Steuerventile 62, 64 erläutert.

In Fig. 5 ist der Normalzustand gezeigt, bei dem die Kupplungen 22, 24 mit ihren zugeordneten Druckregeleinrichtungen 36, 38 verbunden sind.

Die übrigen Anschlüsse der Freigabeventile 42', 44' sind in diesem Zustand unbenutzt.

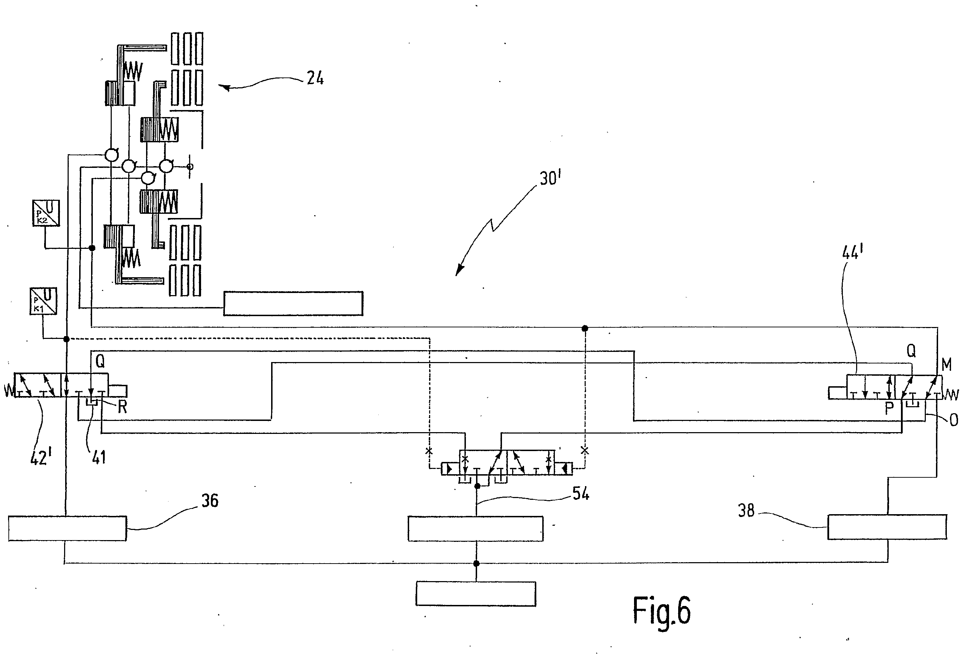

Fig. 6 zeigt den Zustand, bei dem ein Teilfehler betreffend die zweite Kupplung 24 aufgetreten ist. Das zweite Freigabeventil 44' ist in die zweite Schaltstellung gedrückt worden, und zwar von der Gegendruckfeder. Dabei ist die zweite Kupplung 24 nunmehr über die Anschlüsse M und O des zweiten Freigabeventils 44' sowie die Anschlüsse Q und R des ersten Freigabeventils 42' mit dem Tank 41 verbunden. Die erste Kupplung 22 ist weiterhin über das erste Freigabeventil 42' mit der zugeordneten Druckregeleinrichtung 36 verbunden.

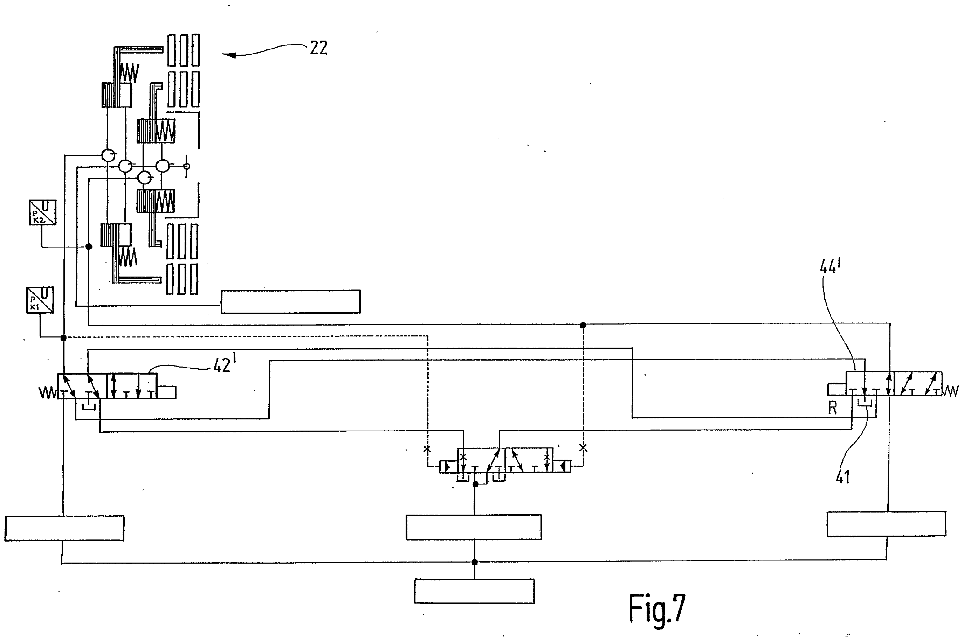

In Fig. 7 ist der entsprechende Zustand gezeigt, bei dem ein Teilfehler betreffend die erste Kupplung 22 aufgetreten ist. In diesem Fall ist die erste Kupplung 22 über die zwei Freigabeventile 42', 44' mit dem Tankanschluss R des zweiten Freigabeventils 44' verbunden.

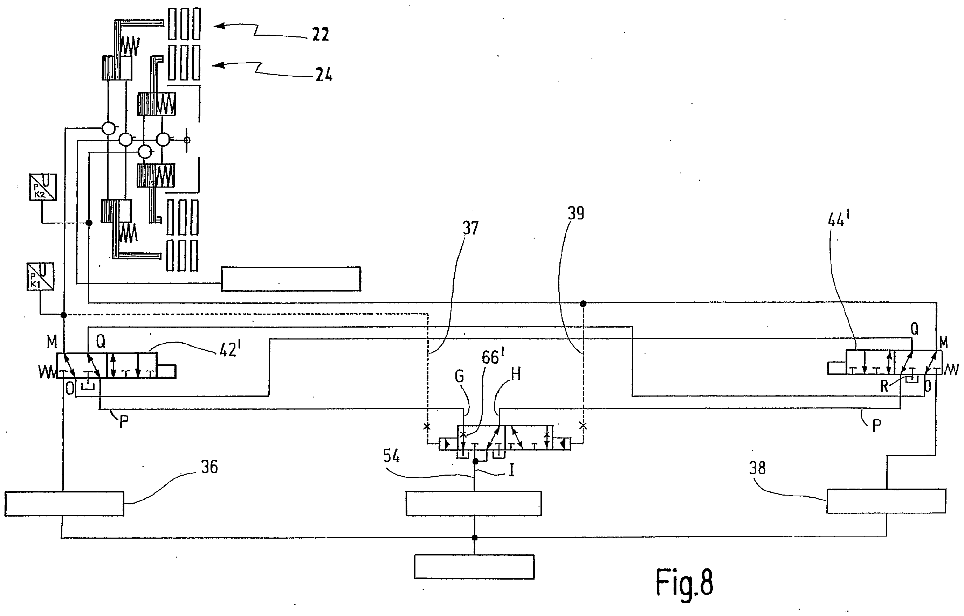

In Fig. 8 ist das Auftreten eines Gesamtfehlers dargestellt.

In diesem Fall sind beide Freigabeventile 42', 44' in ihrer jeweiligen zweiten Schaltstellung, in der sie die Kupplungen 22, 24 von den zugeordneten Druckregeleinrichtungen 36, 38 trennen.

In Fig. 8 ist ferner der Zustand gezeigt, bei dem der Kupplungsdruck 37 der ersten Kupplung 22 größer ist als der Kupplungsdruck 39 der zweiten Kupplung 24.

Demzufolge wird die erste Kupplung 22 bei Auftreten des Gesamtfehlers über die Anschlüsse M, O des ersten Freigabeventils 42' sowie die Anschlüsse Q und P des zweiten Freigabeventils 44' mit einem Anschluss H des Logikventils 56' verbunden. In dem dargestellten Zustand (Fig. 8) ist der Anschluss H unmittelbar mit dem Anschluss I verbunden, an dem der Haltedruck 54 anliegt. Demzufolge wird die erste Kupplung 22 mittels des Haltedrucks 54 geschlossen.

Die zweite Kupplung 24 ist über die Anschlüsse M und O des zweiten Freigabeventils 44' sowie über die Anschlüsse Q und P des ersten Freigabeventils 42' mit dem Anschluss G des Logikventils 56' verbunden. Der Anschluss G des Logikventils ist in der gezeigten Schaltstellung über eine Blende 66' mit dem Tank 41 verbunden.

Demzufolge wird der Kupplungsdruck 39 der zweiten Kupplung 24 nicht schlagartig auf Null abgebaut, sondern allmählich zum Tank hin gedrosselt. Somit wird eine schlagartige Zustandsänderung vermieden.

-Es-versteht sich, dass die Betätigung der Ventile 42, 44, 62, 64 bzw. 42', 44' anstelle über einen hydraulischen Sicherheitssteuerdruck auch direkt elektrisch, bspw. elektromagnetisch, erfolgen kann, wobei die logischen Zustände "1" und "0" erhalten bleiben.

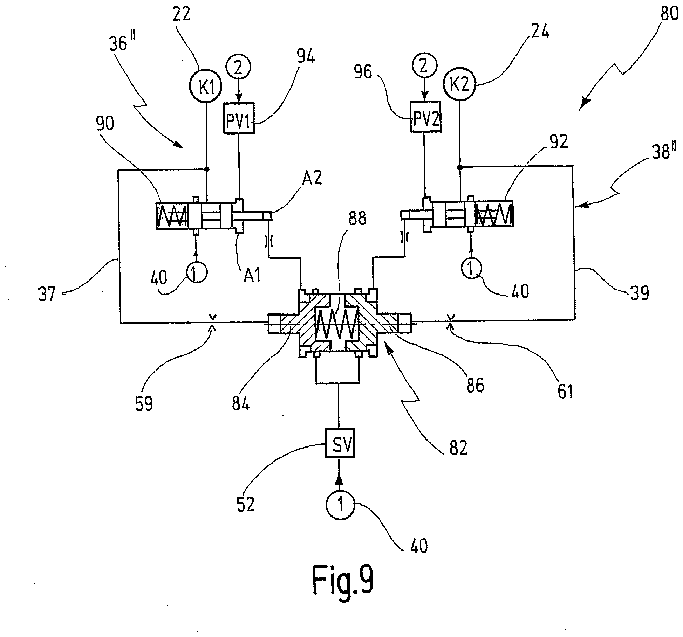

Fig. 9 zeigt eine weitere Ausführungsform eines Hydraulikkreises 80 für ein Doppelkupplungsgetriebe. Gleiche Elemente wie in den Hydraulikkreisen 30, 30' sind der Einfachheit halber mit gleichen Bezugsziffern versehen.

Der Hydraulikkreis 80 ist dazu ausgelegt, im Falle des Auftretens eines Fehlers (unabhängig davon, ob ein Teilfehler oder ein Gesamtfehler) die jeweils aktivere Kupplung der zwei Kupplungen 22, 24 mit einem Leitungsdruck aus einem Drucknetz 40 (ggf. auch druckbegrenzt) zu versorgen. Hierdurch wird, wie bei den zuvor erwähnten Ausführungsformen, erreicht, dass bei Auftreten eines Fehlers die aktivere Kupplung geschlossen bleibt, um weiterhin Drehmoment hierüber übertragen zu können.

Dies wird bei dem Hydraulikkreis 80 durch eine abgewandelte Druckhalteeinrichtung realisiert, die ein Logikventil 82 aufweist.

Das Logikventil 82 weist zwei Schieber 84, 86 auf, zwischen denen eine einzelne Feder 88 angeordnet ist.

Die Feder 88 drückt die zwei Schieber 84, 86 entgegengesetzt nach außen.

An gegenüberliegende Steuerflächen des Logikventils 82 sind (über jeweilige Blenden 59 bzw. 61) die Kupplungsdrücke 37 bzw. 39 angelegt. Sofern der Kupplungsdruck 37 der ersten Kupplung 22 größer ist, wird der hiermit beaufschlagte Schieber 84 auf den zweiten Schieber 86 zu bewegt. Hierdurch wird ein Ausgang (Haltedruck) einer Haltedruckversorgung 52 mit einer Steuerfläche A_{L} eines Druckregelventils 90 verbunden. Das Druckregelventil 90 dient im Normalfall zum Regeln des Druckes der ersten Kupplung K1. Hierfür weist das Druckregelventil 90 eine Steuerfläche A₁ auf, die mit einem Druck aus einem ersten Steuerventil 94 versorgt wird. Je nach Höhe des Steuerdruckes aus dem Steuerventil 94 wird ein Schieber des Druckregelventils 90 gegen eine Feder bewegt und gibt eine Blende hin zu dem Drucknetz 40 frei.

Die hierfür benutzte Steuerfläche A₁ ist deutlich größer als die Steuerfläche A_{L}.

Für die zweite Kupplung 24 ist ein entsprechendes zweites Druckregelventil 92 vorgesehen, das von einem zweiten Steuerventil 96 gesteuert wird.

Im Normalfall ist die Haltedruckversorgung 52 nicht aktiv, so dass deren Ausgang drucklos ist. Das Logikventil 82 schaltet, je nach dem, welche der zwei Kupplungen 22, 24 gerade aktiv ist, jeweils hin und her, wobei die beiden Schieber jeweils nach links bzw. nach rechts bewegt werden. Die Feder 88 dient zur Herstellung eines Grundzustandes des Logikventils 82 und trennt die Haltedruckversorgung 52 in diesem Grundzustand von den Druckregelventilen 90 bzw. 92, wenn die Kupplungsdrücke 37 und 39 beide klein sind gegen die Kraft der Feder 88.

Sofern ein Fehler auftritt, während keine der zwei Kupplungen 22, 24 aktiv ist, wird zwar von der Haltedruckversorgung 52 ein Haltedruck gleich dem Leitungsdruck aus dem Drucknetz 40 erzeugt. Dieser wird jedoch nicht an die Kupplungen 22, 24 weitergegeben, da durch die Feder 88 der beschriebene Grundzustand eingerichtet ist.

Sofern bei Auftreten eines Fehlers eine der zwei Kupplungen 22, 24 aktiv ist (z.B. Kupplung 22), wird der Haltedruck über das Logikventil 82 auf die Steuerfläche A_{L} gelegt. Demzufolge wird ein Druck auf den Schieber des Druckregelventils 90 ausgeübt, der hinreichend ist, um den Schieber gegen die Kraft der Feder zu bewegen, und zwar unabhängig von dem Ausgang des Steuerventils 94. Hierdurch wird die Kupplung K1 mit dem Leitungsdruck aus dem Drucknetz 40 beaufschlagt und somit geschlossen.

Der zweite Schieber 86 des Logikventils 82 trennt das zweite Druckregelventil 92 von dem Haltedruck, so dass die zweite Kupplung 24 nicht mit dem Leitungsdruck beaufschlagt wird.

Der Hydraulikkreis 80, der in Fig. 9 dargestellt ist, erfüllt nicht die Funktionalität, dass zwischen einem Teil- und einem Gesamtfehler unterschieden wird. Bei dem Hydraulikkreis 80 der Fig. 9 wird bei Auftreten eines Fehlers die jeweils aktivere Kupplung der zwei Kupplungen 22, 24 geschlossen. Damit kann erreicht werden, dass bei Auftreten eines Fehlers nach wie vor noch Drehmoment über die jeweils geschlossene Kupplung übertragen wird, so dass insbesondere Sicherheitsprobleme wie während eines Auftretens eines Fehlers während eines Überholvorganges vermieden werden.

Ein Notfahrbetrieb mit nur einer der zwei Kupplungen über längere Zeit ist bei dem Hydraulikkreis 80 jedoch nicht vorgesehen.

## Patentansprüche

1. Verfahren zum Steuern eines Hydraulikkreises (30) für ein Doppelkupplungsgetriebe (10) für Kraftfahrzeuge, wobei der Hydraulikkreis (30) eine erste und eine zweite hydraulisch betätigbare Kupplung (22, 24) aufweist, wobei der Hydraulikkreis (30) einen ersten und einen zweiten Kupplungskreis (32, 34) aufweist, wobei der erste Kupplungskreis (32) ein erstes Druckregelventil (36) zum Regeln eines ersten Kupplungsdruckes (37) für die erste Kupplung (22) aufweist und wobei der zweite Kupplungskreis (34) ein zweites Druckregelventil (38) zum Regeln eines zweiten Kupplungsdruckes (39) für die zweite Kupplung (24) aufweist, und wobei mittels einer Sicherheitsschaltung (26, 46, 48, 50) bei Auftreten eines Fehlers ein sicherer Zustand des Hydraulikkreises (30) gewährleistet wird,
**dadurch gekennzeichnet, dass**
die Sicherheitsschaltung (26, 46, 48, 50) so ausgelegt ist, dass bei Auftreten eines Teilfehlers, der nur einer der zwei Kupplungen (22, 24) zugeordnet ist, diese Kupplung geöffnet wird, und dass bei Auftreten eines Gesamtfehlers, der beiden Kupplungen (22, 24) zugeordnet ist, die Kupplung, deren Kupplungsdruck bei Auftreten des Gesamtfehlers kleiner ist, geöffnet wird, und die andere Kupplung, deren Kupplungsdruck bei Auftreten des Gesamtfehlers größer ist, nicht geöffnet wird, um die Übertragung von Drehmoment über diese Kupplung aufrechtzuerhalten,
wobei die Kupplungskreise (32, 34) jeweils ein Freigabeventil (42, 44) aufweisen, das zwischen dem Druckregelventil (36, 38) und der Kupplung (22, 24) angeordnet und dazu ausgelegt ist, die Verbindung zwischen der Kupplung (22, 24) und dem zugeordneten Druckregelventil (36, 38) zu schließen oder zu trennen,
wobei die Freigabeventile (42, 44) in der Trennposition die Kupplung (22, 24) mit einer weiteren Ventilanordnung (62, 64; 44', 42') verbinden, die dazu ausgelegt ist, die Kupplung (22, 24) mit einem Tank (41) oder mit einer Druckhalteeinrichtung (50) zu verbinden, je nachdem, ob ein Teil- oder ein Gesamtfehler aufgetreten ist, und
wobei die Druckhalteeinrichtung (50) eine Druckvergleichseinrichtung (56) aufweist, die den ersten und den zweiten Kupplungsdruck (37, 39) miteinander vergleicht und bei Auftreten eines Gesamtfehlers die Kupplung mit dem höheren Kupplungsdruck mit dem Haltedruck versorgt.

2. Verfahren nach Anspruch 1, **dadurch gekennzeichnet, dass** eine Kupplung (22, 24) geöffnet wird, indem die Verbindung zwischen der Kupplung (22, 24) und dem zugeordneten Druckregelventil (36, 38) getrennt wird und der Kupplungsdruck (37, 39) verringert wird.

3. Verfahren nach Anspruch 2, **dadurch gekennzeichnet, dass** der Kupplungsdruck (37, 39) bei Öffnen der Kupplung (22, 24) verringert wird, indem die Kupplung (22, 24) drucklos geschaltet wird.

4. Verfahren nach Anspruch 2 oder 3, **dadurch gekennzeichnet, dass** der Kupplungsdruck (37, 39) bei Öffnen der Kupplung (22, 24) allmählich verringert wird.

5. Verfahren nach einem der Ansprüche 1 - 4, **dadurch gekennzeichnet, dass** die Sicherheitsschaltung (26, 46, 48, 50) eine Kupplung (22, 24) mittels eines mechanischen oder hydraulischen Energiespeichers öffnet.

6. Verfahren nach Anspruch 5, **dadurch gekennzeichnet, dass** die Sicherheitsschaltung (26, 46, 48, 50) eine Kupplung (22, 24) öffnet, indem der Energiespeicher ein Ventil (42, 44) betätigt.

7. Verfahren nach einem der Ansprüche 1 - 6, **dadurch gekennzeichnet, dass** die Sicherheitsschaltung (26, 46, 48, 50) bei Auftreten eines Gesamtfehlers die Kupplungsdrücke (37, 39) vergleicht, indem die Kupplungsdrücke (37, 39) an entgegengesetzt wirkende Steuerflächen eines Logikventils (56) angelegt werden.

8. Doppelkupplungsgetriebe (10) für Kraftfahrzeuge, das eine erste und eine zweite hydraulisch betätigbare Kupplung (22, 24) aufweist, wobei das Doppelkupplungsgetriebe einen Hydraulikkreis (30) mit einem ersten und einem zweiten Kupplungskreis (32, 34) aufweist, wobei der erste Kupplungskreis (32) ein erstes Druckregelventil (36) zum Regeln eines ersten Kupplungsdruckes (37) für die erste Kupplung (22) aufweist und wobei der zweite Kupplungskreis (34) ein zweites Druckregelventil (38) zum Regeln eines zweiten Kupplungsdruckes (39) für die zweite Kupplung (24) aufweist, sowie mit einer Sicherheitsschaltung (26, 46, 48, 50), die im Falle eines Fehlers einen sicheren Zustand des Hydraulikkreises (30) gewährleistet,
**dadurch gekennzeichnet, dass**
die Sicherheitsschaltung (26, 46, 48, 50) so ausgelegt ist, dass bei Auftreten eines Teilfehlers, der nur einer der zwei Kupplungen (22, 24) zugeordnet ist, diese Kupplung geöffnet wird, und dass bei Auftreten eines Gesamtfehlers, der beiden Kupplungen (22, 24) zugeordnet ist, die Kupplung, deren Kupplungsdruck bei Auftreten des Gesamtfehlers kleiner ist, geöffnet wird, und die andere Kupplung, deren Kupplungsdruck bei Auftreten des Gesamtfehlers größer ist, nicht geöffnet wird, um die Übertragung von Drehmoment über diese Kupplung aufrechtzuerhalten,
wobei die Kupplungskreise (32, 34) jeweils ein Freigabeventil (42, 44) aufweisen, das zwischen dem Druckregelventil (36, 38) und der Kupplung (22, 24) angeordnet und dazu ausgelegt ist, die Verbindung zwischen der Kupplung (22, 24) und dem zugeordneten Druckregelventil (36, 38) zu schließen oder zu trennen,
wobei die Freigabeventile (42, 44) in der Trennposition die Kupplung (22, 24) mit einer weiteren Ventilanordnung (62, 64; 44', 42') verbinden, die dazu ausgelegt ist, die Kupplung (22, 24) mit einem Tank (41) oder mit einer Druckhalteeinrichtung (50) zu verbinden, je nachdem, ob ein Teil- oder ein Gesamtfehler aufgetreten ist, und
wobei die Druckhalteeinrichtung (50) eine Druckvergleichseinrichtung (56) aufweist, die den ersten und den zweiten Kupplungsdruck (37, 39) miteinander vergleicht und bei Auftreten eines Gesamtfehlers die Kupplung mit dem höheren Kupplungsdruck mit dem Haltedruck versorgt.

9. Doppelkupplungsgetriebe nach Anspruch 8, **dadurch gekennzeichnet, dass** die Freigabeventile (42, 44) jeweils mittels eines Energiespeichers in eine Trennposition vorgespannt sind, in der sie die Verbindung zwischen der Kupplung (22, 24) und dem Druckregelventil (36, 38) trennen.

10. Doppelkupplungsgetriebe nach Anspruch 8, **dadurch gekennzeichnet, dass** die weiteren Ventilanordnungen (62, 64) jeweils durch ein Steuerventil (62, 64) gebildet sind, das getrennt von dem zugeordneten Freigabeventil (42, 44) ausgebildet ist.

11. Doppelkupplungsgetriebe nach Anspruch 8, **dadurch gekennzeichnet, dass** die weiteren Ventilanordnungen (44', 42') jeweils in das andere Freigabeventil (44', 42') integriert sind.

12. Doppelkupplungsgetriebe nach einem der Ansprüche 8 - 10, **dadurch gekennzeichnet, dass** die Sicherheitsschaltung (26, 46, 48, 50) eine Druckhalteeinrichtung (50) aufweist, die aus dem Versorgungsdruck einen Haltedruck für die Kupplung erzeugt, deren Kupplungsdruck bei Auftreten des Gesamtfehlers größer ist, um die Übertragung von Drehmoment über diese Kupplung aufrechtzuerhalten.

13. Doppelkupplungsgetriebe nach Anspruch 8, **dadurch gekennzeichnet, dass** die Druckvergleichseinrichtung (56) ein Wegeventil (56) aufweist, das durch einander gegenüberliegende Steuerflächen (58, 60) betätigbar ist, die mit dem ersten bzw. dem zweiten Kupplungsdruck (37, 39) verbunden sind.

14. Doppelkupplungsgetriebe nach Anspruch 8, **dadurch gekennzeichnet, dass** die Steuerflächen (58, 60) an das Übertragungsverhalten der zugeordneten Kupplung (22, 24) angepasst sind.

15. Doppelkupplungsgetriebe nach einem der Ansprüche 8 - 12, **dadurch gekennzeichnet, dass** die Druckhalteeinrichtung (50) eine Drosseleinrichtung (66', 68') aufweist, um bei Auftreten eines Fehlers den Druckabbau der zu öffnenden Kupplung zu dämpfen.

## Claims

1. A method of controlling a hydraulic circuit (30) for a dual clutch transmission (10) for motor vehicles, the hydraulic circuit (30) comprising a first and a second hydraulically operable clutch (22, 24), the hydraulic circuit (30) comprising a first and a second clutch circuit (32, 34), wherein the first clutch circuit (32) has a first pressure control valve (36) for controlling a first clutch pressure (37) for the first clutch (22) and wherein the second clutch circuit (34) has a second pressure control valve (38) for controlling a second clutch pressure (39) for the second clutch (24), and wherein a safe state of the hydraulic circuit (30) is ensured by means of a safety circuit (26, 46, 48, 50) in the event of a fault occurring, **characterized in that**
the safety circuit (26, 46, 48, 50) is designed such that when a partial error occurs which is associated with only one of the two clutches (22, 24), this clutch is opened, and that when a total error occurs which is associated with both clutches (22, 24), the clutch whose clutch pressure is lower when the total error occurs is opened, and the other clutch whose clutch pressure is higher when the total error occurs is not opened in order to maintain the transmission of torque via this clutch,
wherein the clutch circuits (32, 34) each include a release valve (42, 44) disposed between the pressure control valve (36, 38) and the clutch (22, 24) and adapted to close or disconnect the connection between the clutch (22, 24) and the associated pressure control valve (36, 38),
wherein the release valves (42, 44), in the disconnected position, connect the clutch (22, 24) to a further valve arrangement (62, 64; 44', 42') adapted to connect the clutch (22, 24) to a tank (41) or to a pressure holding device (50), depending on whether a partial or total failure has occurred, and
wherein the pressure holding device (50) comprises a pressure comparing device (56) which compares the first and second clutch pressures (37, 39) with each other and, if a total error occurs, supplies the clutch with the higher clutch pressure with the holding pressure.

2. Method according to claim 1, **characterized in that** a clutch (22, 24) is opened by disconnecting the connection between the clutch (22, 24) and the associated pressure control valve (36, 38) and reducing the clutch pressure (37, 39).

3. The method according to claim 2, **characterized in that** the clutch pressure (37, 39) is reduced when the clutch (22, 24) is opened by releasing the clutch (22, 24) from pressure.

4. The method according to claim 2 or 3, **characterized in that** the clutch pressure (37, 39) is gradually reduced when the clutch (22, 24) is opened.

5. Method according to one of claims 1 - 4, **characterized in that** the safety circuit (26, 46, 48, 50) opens a clutch (22, 24) by means of a mechanical or hydraulic energy accumulator.

6. Method according to claim 5, **characterized in that** the safety circuit (26, 46, 48, 50) opens a clutch (22, 24) by means of the energy accumulator actuating a valve (42, 44).

7. Method according to one of claims 1 - 6, **characterized in that** the safety circuit (26, 46, 48, 50) compares the clutch pressures (37, 39) when a total error occurs by applying the clutch pressures (37, 39) to oppositely acting control surfaces of a logic valve (56).

8. A dual clutch transmission (10) for motor vehicles, comprising first and second hydraulically operable clutches (22, 24), the dual clutch transmission comprising a hydraulic circuit (30) having first and second clutch circuits (32, 34), wherein the first clutch circuit (32) comprises a first pressure control valve (36) for controlling a first clutch pressure (37) for the first clutch (22) and wherein the second clutch circuit (34) comprises a second pressure control valve (38) for controlling a second clutch pressure (39) for the second clutch (24), and with a safety circuit (26, 46, 48, 50) which ensures a safe state of the hydraulic circuit (30) in the event of a fault, **characterized in that**
the safety circuit (26, 46, 48, 50) is designed such that when a partial error occurs which is associated with only one of the two clutches (22, 24), this clutch is opened, and that when a total error occurs which is associated with both clutches (22, 24), the clutch whose clutch pressure is lower when the total error occurs is opened, and the other clutch whose clutch pressure is higher when the total error occurs is not opened in order to maintain the transmission of torque via this clutch,
wherein the clutch circuits (32, 34) each include a release valve (42, 44) disposed between the pressure control valve (36, 38) and the clutch (22, 24) and adapted to close or disconnect the connection between the clutch (22, 24) and the associated pressure control valve (36, 38),
wherein the release valves (42, 44), in the disconnected position, connect the clutch (22, 24) to a further valve arrangement (62, 64; 44', 42') adapted to connect the clutch (22, 24) to a tank (41) or to a pressure holding device (50), depending on whether a partial or total failure has occurred, and
wherein the pressure holding device (50) comprises a pressure comparing device (56) which compares the first and second clutch pressures (37, 39) with each other and, if a total error occurs, supplies the clutch with the higher clutch pressure with the holding pressure.

9. Dual clutch transmission according to claim 8, **characterized in that** the release valves (42, 44) are each biased by means of an energy accumulator into a disconnected position in which they disconnect the connection between the clutch (22, 24) and the pressure control valve (36, 38).

10. Dual clutch transmission according to claim 8, **characterized in that** the further valve arrangements (62, 64) are each formed by a control valve (62, 64) which is formed separately from the associated release valve (42, 44).

11. Dual clutch transmission according to claim 8, **characterized in that** the further valve arrangements (44', 42') are each integrated into the other release valve (44', 42').

12. Dual clutch transmission according to one of claims 8 - 10, **characterized in that** the safety circuit (26, 46, 48, 50) comprises a pressure holding device (50) which generates from the supply pressure a holding pressure for the clutch, the clutch pressure of which is greater when the total error occurs, in order to maintain the transmission of torque via this clutch.

13. Dual clutch transmission according to claim 8, **characterized in that** the pressure comparing device (56) comprises a directional control valve (56) which can be actuated by opposing control surfaces (58, 60) which are connected to the first and the second clutch pressure (37, 39), respectively.

14. Dual clutch transmission according to claim 8, **characterized in that** the control surfaces (58, 60) are adapted to the transmission behavior of the associated clutch (22, 24).

15. Dual clutch transmission according to one of claims 8 - 12, **characterized in that** the pressure holding device (50) has a throttle device (66', 68') for attenuating the pressure reduction of the clutch to be opened when a fault occurs.

## Revendications

1. Procédé de commande d'un circuit hydraulique (30) destiné à une transmission à double embrayage (10) destinée à des véhicules automobiles, le circuit hydraulique (30) comportant un premier et un deuxième embrayage à commande hydraulique (22, 24), le circuit hydraulique (30) comportant un premier et un deuxième circuit d'embrayage (32, 34), le premier circuit d'embrayage (32) comportant une première vanne de régulation de pression (36) destinée à réguler une première pression d'embrayage (37) destinée au premier embrayage (22) et le deuxième circuit d'embrayage (34) comportant une deuxième vanne de régulation de pression (38) destinée à réguler une deuxième pression d'embrayage (39) destinée au deuxième embrayage (24), et un état sécurisé du circuit hydraulique (30) étant assuré au moyen d'un circuit de sécurité (26, 46, 48, 50) en cas de défaillance, **caractérisé en ce que**
le circuit de sécurité (26, 46, 48, 50) est conçu de telle manière que, lorsqu'une défaillance partielle se produit qui n'est associée qu'à l'un des deux embrayages (22, 24), cet embrayage est ouvert, et **en ce que**, lorsqu'une défaillance totale se produit qui est associée aux deux embrayages (22, 24), l'embrayage, dont la pression d'embrayage est la plus faible lorsque la défaillance totale se produit, est ouvert, et l'autre embrayage, dont la pression d'embrayage est la plus élevée lorsque la défaillance totale se produit, n'est pas ouvert afin de maintenir la transmission de couple par cet embrayage,
les circuits d'embrayage (32, 34) étant chacun une vanne de décharge (42, 44) qui est disposée entre la vanne de régulation de pression (36, 38) et l'embrayage (22, 24) et qui est conçue pour fermer ou couper la liaison entre l'embrayage (22, 24) et la vanne de régulation de pression (36, 38) associée,
les vannes de décharge (42, 44) reliant, dans la position de coupure, l'embrayage (22, 24) à un autre ensemble formant vanne (62, 64 ; 44', 42') qui est conçu pour relier l'embrayage (22, 24) à un réservoir (41) ou à un dispositif de maintien de pression (50), selon qu'une défaillance partielle ou une défaillance totale s'est produite, et
le dispositif de maintien de pression (50) comportant un dispositif de comparaison de pression (56) qui compare les première et deuxième pressions d'embrayage (37, 39) entre elles et qui fournit à l'embrayage la pression d'embrayage la plus élevée et la pression de maintien lorsqu'une défaillance totale se produit.

2. Procédé selon la revendication 1, **caractérisé en ce qu'**un embrayage (22, 24) est ouvert par coupure de la liaison entre l'embrayage (22, 24) et la vanne de régulation de pression (36, 38) associée et par réduction de la pression d'embrayage (37, 39).

3. Procédé selon la revendication 2, **caractérisé en ce que** la pression d'embrayage (37, 39) est réduite lors de l'ouverture de l'embrayage (22, 24) par commutation dépressurisée de l'embrayage (22, 24).

4. Procédé selon la revendication 2 ou 3, **caractérisé en ce que** la pression d'embrayage (37, 39) est progressivement réduite lors de l'ouverture de l'embrayage (22, 24).

5. Procédé selon l'une des revendications 1 à 4, **caractérisé en ce que** le circuit de sécurité (26, 46, 48, 50) ouvre un embrayage (22, 24) au moyen d'un accumulateur d'énergie mécanique ou hydraulique.

6. Procédé selon la revendication 5, **caractérisé en ce que** le circuit de sécurité (26, 46, 48, 50) ouvre un embrayage (22, 24) par actionnement d'une vanne (42, 44) au moyen de l'accumulateur d'énergie.

7. Procédé selon l'une des revendications 1 à 6, **caractérisé en ce que** le circuit de sécurité (26, 46, 48, 50) compare les pressions d'embrayage (37, 39) lorsqu'une défaillance totale se produit par application des pressions d'embrayage (37, 39) sur des surfaces de commande, agissant dans des sens opposés, d'une vanne logique (56).

8. Transmission à double embrayage (10) destinée à des véhicules automobiles et comportant un premier et un deuxième embrayage à commande hydraulique (22, 24), la transmission à double embrayage comportant un circuit hydraulique (30) pourvu d'un premier et d'un deuxième circuit d'embrayage (32, 34), le premier circuit d'embrayage (32) comportant une première vanne de régulation de pression (36) destinée à réguler une première pression d'embrayage (37) destinée au premier embrayage (22) et le deuxième circuit d'embrayage (34) comportant une deuxième vanne de régulation de pression (38) destinée à réguler une deuxième pression d'embrayage (39) destinée au deuxième embrayage (24), ainsi que d'un circuit de sécurité (26, 46, 48, 50) qui assure un état sécurisé du circuit hydraulique (30) en cas de défaillance,
**caractérisé en ce que**
le circuit de sécurité (26, 46, 48, 50) est conçu de telle manière que, lorsqu'une défaillance partielle se produit qui n'est associée qu'à l'un des deux embrayages (22, 24), cet embrayage est ouvert, et **en ce que**, lorsqu'une défaillance totale se produit qui est associée aux deux embrayages (22, 24), l'embrayage, dont la pression d'embrayage est la plus faible lorsque la défaillance totale se produit, est ouvert, et l'autre embrayage, dont la pression d'embrayage est la plus élevée lorsque la défaillance totale se produit, n'est pas ouvert afin de maintenir la transmission du couple par le biais de cet embrayage,
les circuits de couplage (32, 34) comportant chacun une vanne de décharge (42, 44) qui est disposée entre la vanne de régulation de pression (36, 38) et l'embrayage (22, 24) et qui est conçue pour fermer ou couper la liaison entre l'embrayage (22, 24) et la vanne de régulation de pression (36, 38) associée,
les vannes de décharge (42, 44) reliant, dans la position de coupure, l'embrayage (22, 24) à un autre ensemble formant vanne (62, 64 ; 44', 42') qui est conçu pour relier l'embrayage (22, 24) à un réservoir (41) ou à un dispositif de maintien de pression (50), selon qu'une défaillance partielle ou totale s'est produite, et
le dispositif de maintien de pression (50) comportant un dispositif de comparaison de pression (56) qui compare les première et deuxième pressions d'embrayage (37, 39) entre elles et qui fournit à l'embrayage la pression d'embrayage la plus élevée et la pression de maintien lorsqu'une défaillance totale se produit.

9. Transmission à double embrayage selon la revendication 8, **caractérisée en ce que** les vannes de décharge (42, 44) sont chacune sollicitées au moyen d'un accumulateur d'énergie dans une position de coupure dans laquelle elles coupent la liaison entre l'embrayage (22, 24) et la vanne de régulation de pression (36, 38).

10. Transmission à double embrayage selon la revendication 8, **caractérisée en ce que** les autres ensembles formant vanne (62, 64) sont chacun formés par une vanne de commande (62, 64) qui est formée séparément de la vanne de décharge (42, 44) associée.

11. Transmission à double embrayage selon la revendication 8, **caractérisée en ce que** les autres ensembles formant vanne (44', 42') sont chacun intégrés dans l'autre vanne de décharge (44', 42').

12. Transmission à double embrayage selon l'une des revendications 8 à 10, **caractérisée en ce que** le circuit de sécurité (26, 46, 48, 50) comporte un dispositif de maintien de pression (50) qui génère à partir de la pression d'alimentation une pression de maintien de l'embrayage dont la pression d'embrayage est la plus élevée lorsque la défaillance totale se produit afin de maintenir la transmission de couple par le biais de cet embrayage.

13. Transmission à double embrayage selon la revendication 8, **caractérisée en ce que** le dispositif de comparaison de pression (56) comporte un distributeur (56) qui peut être actionné par des surfaces de commande (58, 60), opposées l'une à l'autre, qui sont reliées à la première ou la deuxième pression d'embrayage (37, 39).

14. Transmission à double embrayage selon la revendication 8, **caractérisée en ce que** les surfaces de commande (58, 60) sont adaptées au comportement de transmission de l'embrayage (22, 24) associé.

15. Transmission à double embrayage selon l'une des revendications 8 à 12, **caractérisée en ce que** le dispositif de maintien de pression (50) comporte un dispositif d'étranglement (66', 68') destiné à amortir la réduction de pression de l'embrayage à ouvrir en cas de défaillance.
